# FASCICULE DE BREVET EUROPEEN

(11) **EP 0 569 543 B1**
(45) Date de publication et mention de la délivrance du brevet: **17.05.1995**
(21) Numéro de dépôt: 92906373.3
(22) Date de dépôt: 03.02.1992
(51) Int. Cl.: F16H 48/22

(54) **SYSTEME D'AXE DIFFERENTIEL POUR VEHICULES UTILITAIRES TOUT TERRAIN**
AUSGLEICHSACHSE FÜR GELÄNDEFAHRZEUGE
DIFFERENTIAL AXLE SYSTEM FOR OFF-HIGHWAY UTILITY VEHICLES

(30) Priorité: 01.02.1991 FR 9101141
(43) Date de publication de la demande: 18.11.1993
(73) Titulaire: AMIAUT, Jean, F-95350 Saint-Brice-Sous-Forêt (FR)
(72) Inventeur: AMIAUT, Jean, F-95350 Saint-Brice-Sous-Forêt (FR)
(74) Mandataire: Nithardt, Roland
(86) Numéro de dépôt international: FR9200094
(87) Numéro de publication internationale: WO9214078

(56) Documents cités:
- WO-A-89/03775
- DE-U- 1 993 768
- GB-A- 19 850
- US-A- 1 746 870

## Description

La présente invention concerne un système différentiel dont le principe, l'utilisation de pignons coniques, est en général, connu dans l'industrie automobile depuis le début du siècle, et dans sa forme la plus classique est pratiquement inchangé pour des raisons de fiabilité suffisante. Depuis quelques années est apparu sur le marché une nouvelle gamme de véhicules située entre la voiture et la moto ; Et de nouveaux modèles à 4 roues motrices arrières et deux roues directrices à l'avant. A vide ou peu chargé le véhicule ne pose pas trop de problèmes, mais dès que l'on dépose dans la benne des charges plus importantes, le véhicule devient dangereux, pour des raisons de maniabilité dûs à l'absence de différentiel. Pour d'autres raisons un véhicule léger doté d'un différentiel classique a le défaut d'amorcer facilement des petits patinages qui parfois imobilisent le véhicule. Le différentiel à blocage mécanique pose également des problèmes, comme on peut le demontrer en citant en reférence le brevet WO-A-89/03775 (du mème inventeur) désignant un système différentiel adaptable sur l'axe d'origine. La dite adaptation sur l'axe d'origine, crée des points de faiblesses tout en compliquant la fabrication, de surcroit le dit différentiel adaptable sur l'axe d'origine comporte un blocage mécanique (commandé à distance) lequel s'est avéré difficilement réalisable et peu fiable à l'encontre des vibrations que l'on constate sur ce genre de véhicule à quatre roues motrices arrières nécessitant deux commandes à distance ou couplage des deux commandes, et la nécessité de les rendre étanches par des protections assurant leur bonne marche.

L'invention a pour but de réaliser un système d'axe différentiel adaptable sur tout véhicule et permettant de remédier à ces inconvénients.

Elle a donc pour objet un système d'axe différentiel autoportant notament pour véhicule comprenant un premier demi-arbre destiné à recevoir une première roue motrice, et sur lequel est fixé un premier planétaire à denture conique ; un second demi-arbre destiné a recevoir une seconde roue motrice et sur lequel est monté un second planétaire à denture conique ; des satellites portés par un boîtier monté à rotation par rapport au premier et second demi-arbre, et contenant les premiers second planetaires caractérisé en ce que le premier demi-arbre est constitué par un axe autoportant puis un premier planétaire épaulé et fixé sensiblement en son centre dont la plus longue partie reçoit à son extrémité un premier plateau de la première roue mottrice, l'axe de palier situé audela des dentures coniques du premier planétaire reçoit à rotation le deuxième demi-arbre composé d'un tube palier reliant le deuxième planétaire au deuxième plateau de la deuxième roue motrice ; les dits premier et deuxième demi-arbres le boîtier d'entrainement contenant les premiers et second planétaires à dentures coniques, les satellites eux-mèmes associés à la rotation inverse des deux demi-arbres, laquelle dite rotation inversée est contrôlée par un dispositif antivibrations, antipatinage comportant un réglage graduel, des moyens de réglage et de serrage des deux demi-arbres constituent un sous-ensemble destiné à être fixé sur boîtier à roulements au moyen d'un tube (entretoise).

Suivant une autre caratéristique de l'invention le dispositif antivibrations, antipatinage présenté (aux dessins annexes) sous la forme d'un mécanisme d'embrayage, logé de préférence dans un des plateaux de roues, et dans un compartiment étanche dont la fermeture est avantageusement renforcée par les goujons de roues et protégée dans la jante.

La caractéristique principale de l'invention basée surle fait que les satellites inverseurs (contenus dans le boîtier d'entraînement) lient une extremité des deux demi-arbres,l'autre extremité étant verouillée par le dispositif (d'embrayage) évitant ainsi la rupture de traction des deux roues motrices.

L'argument suivant démontre l'action des roues directrices agissant à la manière d'un bras de levier démultiplicateur sur les roues motrices, lesquelles actionnent le dispositif ( d'embrayage) en le faisant glisser à volonté sans impliquer directement le différentiel.

L'invention va maintenant ètre décrite avec plus de détails en se reférant à un mode de réalisation particulier donné à titre d'exemple seulement, et présenté aux dessins annexés dans lesquels:

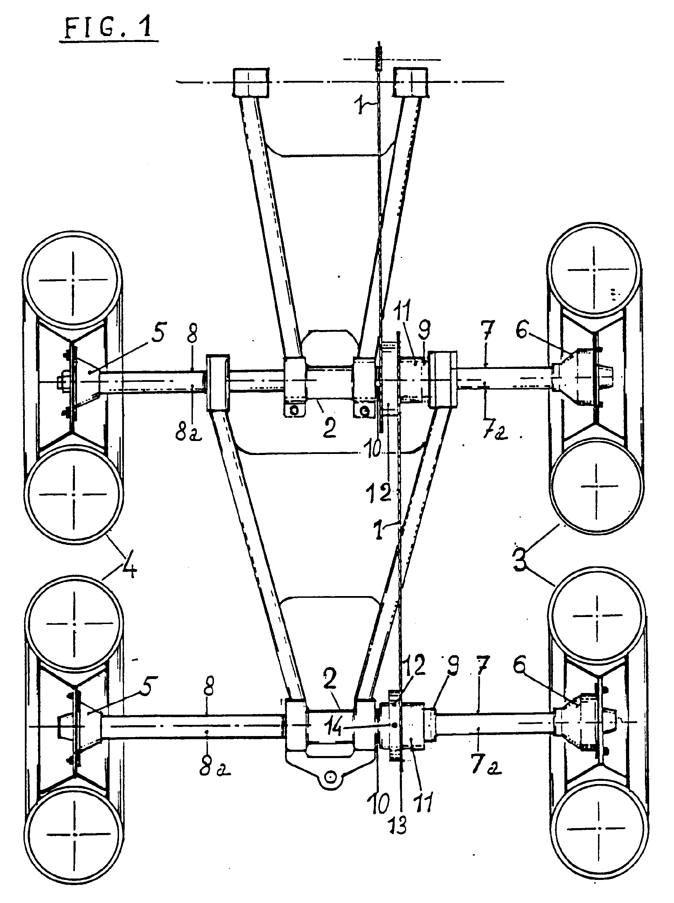

La FIG 1 : est une vue en élévation montrant la disposition des axes différentiel par rapport aux bras de suspensions.
La FIG 2 : est une vue en coupe longitudinale montrant l'assamblage des deux demi-arbres par rapport au dispositif antivibrations, antipatinage.
La figure 3 : montre l'axe différentiel standart suivant l'invention.
La FIG 4 : est une vue en coupe suivant une ligne ; 1 -1 de la figure 3 : montrant les moyens de fixations du disque de liaison.
La FIG 5 : est une vue en coupe du plateau de roue contenant le dispositif.

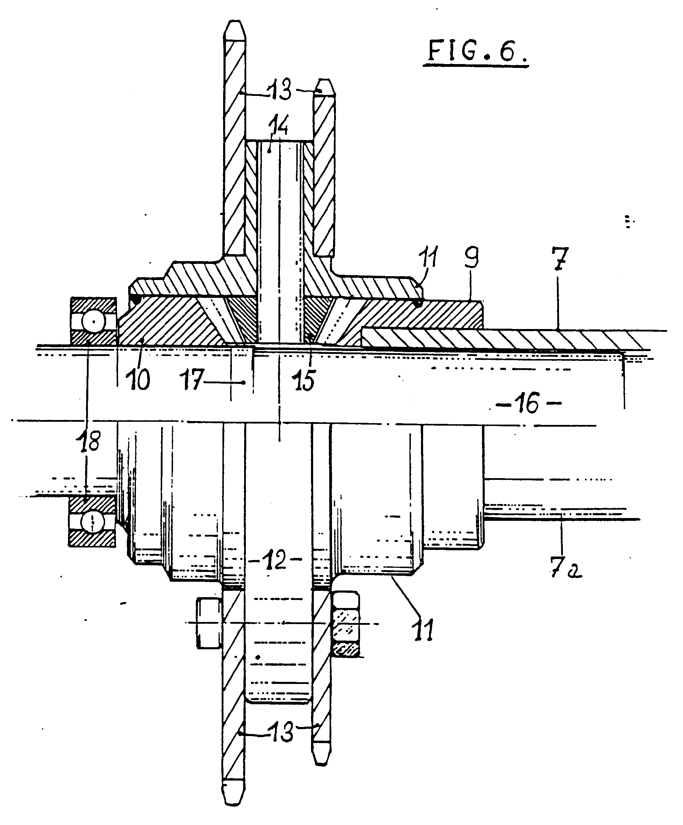

La FIG 6 : est une vue en quart de coupe longitudinale du boîtier différentiel.

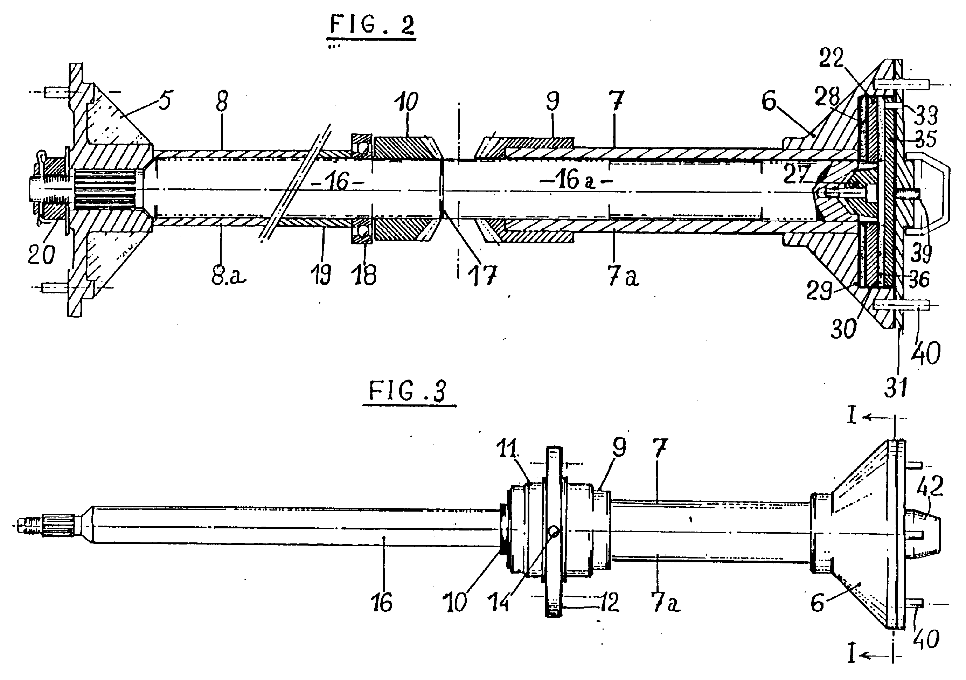

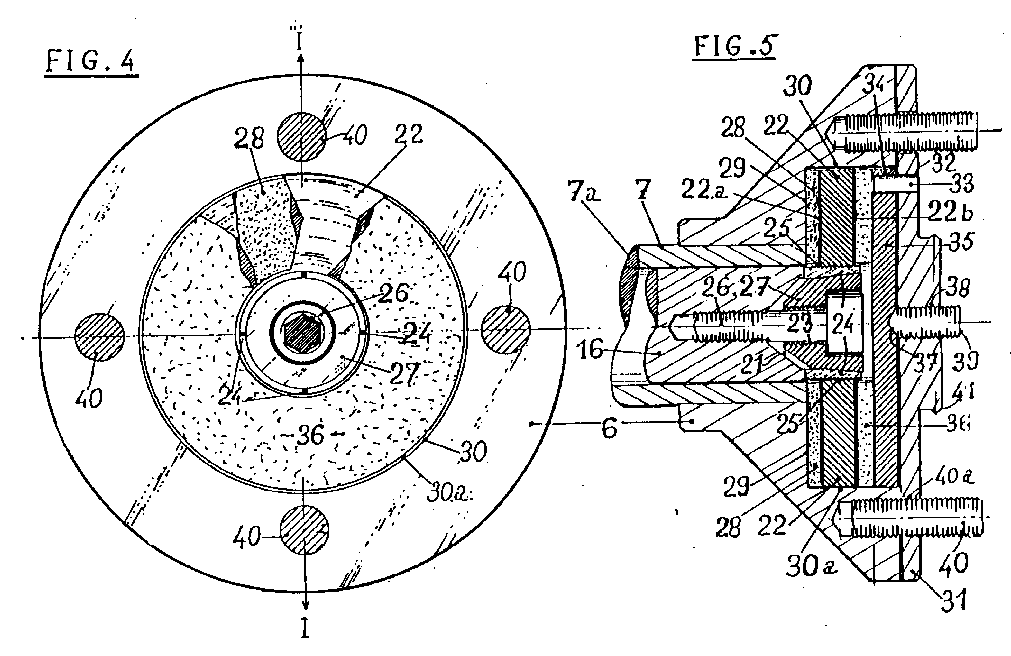

Le système différentiel représenté aux figures 2 à 4 : comprend un axe autoportant 16 dont une extrémité comporte un plateau de roue 5, et sensiblement en son centre un épaulement 17 destiné limiter avec précision la fixation d'un premier planétaire 10 puis audelà des dentures coniques du dit planétaire 10, s'étend un axe de palier 16 comportant à son extrémité un filetage 25.

L'assemblage du premier demi-arbre autoportant s'éffectue en glissant le premier planétaire 10 collé en butée contre l'épaulement 17, puis à nouveau glisser l'axe 16 dans le boitier à roulements 2 (d'origine) jusqu'au contact du planétaire 10 avec l'élément rotatif, puis ont fait glisser à nouveau sur l'axe 16 le tube entretoise 8 en butée sur le boitier 2 , l'autre extrémité du dit tube entretoise reçoit en épaulement le premier plateau de roue et un écrou de serrage 20 sur le filetage de l'axe 16 (fig 2).

L'assemblage du deuxième demi-arbre s'éffectue en fixant un deuxième planétaire 9 sur une extrémité du tube palier 7, l'autre extremité du tube reçoit le deuxième plateau de roue 6, lequel plateau comporte un compartiment 30 apte à contenir les éléments antivibrations, antipatinage.

Le boîtier 11 comporte des axes 14 lesquels reçoivent à rotation des satellites 15, le boitier 11 contenant les satellites 15 est engagé sur le planétaire 10. Puis ont engage le deuxième demi-arbre 7 sur son axe de palier 16 jusqu'aux quatre pignons à denture conique 9, 10 et 15. On peut maintenant monter et régler le latéral , en appliquant sur la paroi de fond 29 du plateau 6, la première friction 28 puis sur le filetage 25, on visse le disque de liaison 22 jusqu'au contacte de la friction 28 ; le réglage effetué le dit disque de liaison 22 est immobilisé par des moyens 26,27 agissant sur des fentes d'extention 24 (fig:4).

Les deux demi-arbres étant assemblés et réglés à rotation inverse, on va effectuer le montage du système anti-vibrations, antipatinage, en appliquant sur la façe 22b (du dit disque de liaison 22) la deuxième friction 36 sur laquelle on applique à nouveau le disque de compression 35, lui-même ajusté en coulissement axial dans la paroi cylindrique 30 du compartiment 30a, enfin on applique le couvercle 31 en engageant les 4 goujons de roues dans les 4 perçages 40a, le dit couvercle 31 comporte un perçage 32 décentré, dans lequel vient se fixer un axe 38 dont l'autre extrémité du dit axe est introduite en coulissement dans un deuxième perçage 34 du dit disque de compression 35. Le dit couvercle de fermeture 31 comporte dans son centre axiale un perçage taraudé 38 apte à recevoir une vis de réglage 39 dont une partie conique 37 vient en pression dans une cavité analogue, contre l'action de la paroi 31 fermée par les goujons de roue 40 et la vis de réglage 39 laquelle vis est protégée par un chapeau 42 lui-même fixé par une arête circulaire 41. Le boîtier 11 comporte une couronne d'entraînement 12 dans laquelle sont implantés les axes 14 de satellites 15, puis la dite couronne d'entrainement 12 recoit en fixation un platteau 13 relié au moteur par l'intermediaire des chaines 1.

## Revendications

1. Système d'axe différentiel autoportant pour véhicule comprenant un premier demi-arbre (8,16) destiné à recevoir une première roue motrice (4) et sur lequel est monté un premier planétaire (10) à denture conique, un second demi-arbre (7) destiné à recevoir une seconde roue motrice (3) et sur lequel est monté un second planétaire (9) à denture conique, des satellites (15) portés par un boîtier (11) monté à rotation par rapport au premier et second demi-arbre et contenant les premier et second planétaires (9 et 10), caractérisé en ce que le premier demi-arbre (8,16) est constitué par un axe autoportant (16) puis un premier planétaire (10) épaulé et fixé sensiblement en son centre dont la plus longue partie reçoit à son extrémité un premier plateau de roue (5) de la première roue motrice (4), l'axe de palier (16a) situé au delà des dentures coniques du premier planétaire (10), reçoit à rotation le deuxième demi-arbre composé d'un tube palier (7a) reliant le deuxième planétaire (9) au deuxième plateau de la deuxième roue motrice (3) ; les dits premier et deuxieme demi-arbres, le boîtier d'entraînement (11) contenant les premier et second planétaires (9 et 10), les satellites (15) eux-mêmes associés à la rotation inverse des deux demi-arbres(8,16,7), laquelle dite rotation inverse est contrôlée par un dispositif antivibrations, antipatinage réglable graduelement, des moyens de réglage et de serrage (24,25,26,27) des deux demi-arbres (7,8) constituent un sous-ensemble destiné à être fixé sur un boîtier (2) à roulements (18) au moyen d'un tube (entretoise (8a), fig.2).

2. Système d'axe différentiel suivant la revendication 1, caractérisé en ce que les satellites (15) lient à rotation inverse les extrémites (9 et 10) des deux demi-arbres (16,8, et 7), les autres extremités (2, et 6) sont vérouillées par le dispositf antivibrations contenu de préférence dans le plateau de roue (6), (fig.5).

3. Système d'axe différentiel suivant la revendication 1 caractérisé en ce que le dit axe autoportant (8,16) comporte sensiblement en son centre un épaulement (17) destiné à délimiter avec précision la fixation du planétaire (10), puis au delà de ses dentures coniques s'étend un axe de palier (16a) dont l'extremité comporte des moyens (24,25,26,27) de fixation du dit disque de liaison (22) (fig.2 et 6).

4. Système d'axe différentiel suivant la revendication 1 caracterisé en ce que le plateau de roue (6) comporte une paroi cylindrique (30) dont une extremité est délimitée par une deuxième paroi de fond (29) l'autre extremité libre reçoit un couvercle (31) fermé avantageusement par les goujons de roues (40) dans le perçage (40a).

5. Système d'axe diférentiel suivant la revendication 4 caractérisé en ce que le couvercle de fermeture comporte un perçage excentré (32) apte à recevoir en fixation un axe d'entraînement (33) dont l'extrémité apparente reçoit en coulissement un deuxième perçage (34) situé à proximité du bord libre du disque de compression (35).

6. Système d'axe diférentiel suivant la revendication 5 caractérisé en ce que le couvercle de fermeture (31) comporte en son centre un perçage fileté (38) apte à recevoir une vis de réglage (39) dont une extremité d'appui conique (37) est destinée à maintenir une certaine pression au centre du dit disque de compression (35).

7. Système d'axe différentiel suivant la revendication 4 caractérisé en ce que le compartiment (30a) reçoit en fixation sur la paroi de fond (29) une première friction (28) et une deuxième friction (36) fixée sur le disque de compression (22), lequel dit disque de compression est apte à coulisser axialement dans la paroi cylindrique (30) et sur l'axe d'entraînement (33) ; (fig.4,5).

8. Système d'axe différentiel suivant les revendications 1 à 7 caractérisé en ce que le planétaire (10) est solidaire à rotation du disque de contrôle (22) dont les faces de contact (22à et 22b) sont insérées entre les deux frictions (28 et 36), elles mêmes associées à rotation au deuxième planétaire (9), lesquels deux planétaires (9 et 10) sont controlés par les satellites (15) (suivant l'effet antipatinage).

9. Systeme d'axe différentiel suivant les revendications 1 à 7 caractérisé en ce que la roue motrice (4) est solidaire à rotation du disque de controle (22) par l'intermediaire du dit axe autoportant (16), la deuxième roue motrice (3) inversement solidaire à rotation des friction (28;36) les quelles frictions insèrent en glissement le dit disque de contrôle (22) (suivant l'effet différentiel).

10. Systeme differentiel suivant la revendication 4 caracterisé en ce que la pression exercée sur le dispositif (antivibration, antipainage ) contenu dans le compartiment (30a) contre l'action de la paroi de fond (29) du couvercle de fermeture (31) et de la vis de réglage (39), laquelle vis de réglage est abritée au centre de la jante de roue (3) et accessible de l'extérieur du véhicule.

## Patentansprüche

1. Selbsttragende Ausgleichsachse für Fahrzeuge, mit einer ersten Halbwelle (8,16), die dafür bestimmt ist, ein erstes Antriebsrad (4) aufzunehmen, und auf der ein erstes als Kegelrad ausgeführtes Sonnenrad (10) angeordnet ist, mit einer zweiten Halbwelle (7), die dafür bestimmt ist, ein zweites Antriebsrad (3) aufzunehmen, und auf der ein zweites als Kegelrad ausgeführtes Sonnenrad (9) angeordnet ist, mit Planetenrädern (15), die von einem Gehäuse (11) getragen werden, das gegenüber der ersten und der zweiten Halbwelle drehbar angeordnet ist und das das erste und das zweite Sonnenrad (9 und 10) enthält,
**dadurch gekennzeichnet**, daß die erste Halbwelle (8,16) aus einer selbsttragenden Achse (16) besteht, sowie aus einem ersten Sonnenrad (10), das in seiner Mitte abgestützt und im wesentlichen fest ist, wobei der längste Teil der ersten Halbwelle an seinem Ende eine erste Radaufnahme (5) des ersten Antriebsrades (4) aufweist; wobei die Lagerachse (16a), die hinter dem als Kegelrad ausgebildeten ersten Sonnenrad (10) angeordnet ist, eine Drehbewegung der zweiten Halbwelle überträgt, wobei die zweite Halbwelle aus einem Lagerrohr (7a) besteht, das das zweite Sonnenrad (9) mit der zweiten Aufnahme des zweiten Antriebsrades (3) verbindet, wobei die erste und die zweite Halbwelle das Antriebsgehäuse (11) tragen, welches das das erste und das zweite Sonnenrad (9 und 10) enthält, wobei die eigentlichen Planetenräder (15) mit der gegensinnigen Drehbewegung der beiden Halbwellen (8,16,7) rotieren, wobei die gegensinnige Drehbewegung von einer Einrichtung gegen Schwingungen und gegen ein Durchschlüpfen, die stufenweise einstellbar ist, überwacht wird, und wobei Einrichtungen (24,25,26,27) für die Einstellung und das Feststellen der beiden Halbwellen (7,8) eine Untergruppe bilden, die mit Hilfe eines Zwischenrohrs (8a) (Fig. 2) auf einem Gehäuse (2) eines Wälzlagers (18) befestigbar ist.

2. Ausgleichsachse nach Anspruch 1,
**dadurch gekennzeichnet,** daß die Planetenräder (15) die Enden (9 und 10) der beiden Halbwellen (16,8 und 7) für eine gegensinnige Drehbewegung verbinden, wobei die anderen Enden (2 und 6) durch die Einrichtung gegen Schwingungen, die vorzugsweise in der Radaufnahme (6) (Fig. 5) enthalten ist, verriegelt sind.

3. Ausgleichsachse nach Anspruch 1,
**dadurch gekennzeichnet,** daß die selbsttragende Achse (8,16) im wesentlichen in ihrer Mitte eine Abstützung (17) aufweist, die dafür bestimmt ist, die Befestigung des als Kegelrad ausgebildeten Sonnenrades (10) genau abzugrenzen; wobei sich über das Kegelrad hinaus eine Lagerachse (16a) erstreckt, deren Ende Einrichtungen (24, 25,26,27) für die Befestigung der Verbindungsscheibe (22) (Fig. 2 und 6) aufweist.

4. Ausgleichsachse nach Anspruch 1,
**dadurch gekennzeichnet,** daß die Radaufnahme (6) eine zylindrische Wandung (30) besitzt, deren eines Ende durch eine zweite Grundwandung (29) abgegrenzt ist, wobei das andere freie Ende einen Deckel (31) aufnimmt, der von den Radbolzen (40) in der Bohrung (40a) vorteilhaft geschlossen ist.

5. Ausgleichsachse nach Anspruch 4,
**dadurch gekennzeichnet,** daß der Verschlußdeckel eine exzentrische Bohrung (32) für die Befestigung einer Antriebsachse (33) aufweist, deren sichtbares Ende eine zweite Bohrung (34) in der Nähe des freien Randes der Druckscheibe (35) enthält.

6. Ausgleichsachse nach Anspruch 5,
**dadurch gekennzeichnet,** daß der Verschlußdeckel (31) in seiner Mitte eine Gewindebohrung (38) für die Aufnahme einer Einstellschraube (39) aufweist, wovon ein konisch zulaufendes Ende (37) dafür bestimmt ist, einen bestimmten Druck in der Mitte der Druckscheibe (35) aufrechtzuerhalten.

7. Ausgleichsachse nach Anspruch 4,
**dadurch gekennzeichnet,** daß in dem Bereich (30a) auf der Grundwandung (29) eine erste Reibungsfläche (28) und auf der Druckscheibe (22) eine zweite Reibungsfläche (36) befestigt sind, wobei die Druckscheibe in der Lage ist, axial bezüglich der zylindrischen Wandung (30) und auf der Antriebsachse (33) (Fig. 4, 5) zu gleiten.

8. Ausgleichsachse nach einem der Ansprüche 1 bis 7,
**dadurch gekennzeichnet,** daß das Sonnenrad (10) für eine Drehbewegung mit der Kontrollscheibe (22) fest verbunden ist, deren Kontaktflächen (22a und 22b) zwischen den beiden Reibungsflächen (28 und 36) vorgesehen sind, die mit dem zweiten Sonnenrad (9) für eine Drehbewegung verbunden sind, wobei die beiden Sonnenräder (9 und 10) von den Planetenrädern (15) (entsprechend der Wirkung der Einrichtung gegen ein Durchschlüpfen) überwacht werden.

9. Ausgleichsachse nach einem der Ansprüche 1 bis 7,
**dadurch gekennzeichnet,** daß das Antriebsrad (4) über die selbsttragende Achse (16) mit der Kontrollscheibe (22) für eine Drehbewegung fest verbunden ist; wobei umgekehrt das zweite Antriebsrad (3) mit den Reibungsflächen (28,36) für eine Drehbewegung fest verbunden ist, wobei die Reibungsflächen (aufgrund der Differentialwirkung) die Kontrollscheibe (22) aufgrund von Schlupf festhalten.

10. Ausgleichsachse nach Anspruch 4,
**dadurch gekennzeichnet,** daß der Druck, der durch die Einrichtung in dem Bereich (30a) (gegen Schwingungen und gegen ein Durchschlüpfen) gegen die Wirkung der Grundwandung (29) des Abschlußdeckels (31) und der Einstellschraube (39) abgestützt wird, wobei die Einstellschraube (39) in der Mitte der Radfelge (3) geschützt und von der Außenseite des Fahrzeugs zugänglich ist.

## Claims

1. Self-supporting differential axle system for a vehicle comprising a first half-shaft (8, 16) designed to receive a first drive wheel (4) and to which are attached a first conical toothed planet pinion (10), a second half-shaft (7) designed to receive a second drive wheel (3) and to which is attached a second conical toothed planet pinion (9), satellite wheels (15) supported by a casing (11) rotatably mounted in relation to the first and second half-shafts and containing the first and second planet wheels (9 and 10), characterized in that said first half-shaft (8, 16) consists of a self-supporting axle (16) and a first planet pinion (10) abutted against and attached essentially at its center, the longest portion of which receives at one end a first wheel plate (5) of the first drive wheel (4), and the bearing axle (16a) situated above the conical gears of the first planet wheel (10) rotatably supports the second half-shaft comprising a support tube (7a) connecting the second planet pinion (9) to the second plate of the second drive wheel (3); said first and second half-shafts, the drive casing (11) containing the first and second planet pinions (9 and 10), the satellite wheels (15) themselves being associated in inverse rotation with the two half-shafts (8, 16, 7), which inverse rotation is controlled by an anti-vibration, anti-skid device which is gradually regulable; means (24, 25, 26, 27) for regulating and locking the two half-shafts (7, 8), constituting a unit which can be attached to a wheel casing (2) by means of a tube (strut 8a, Figure 2).

2. Differential axle system according to claim 1 characterized in that the satellite wheels (15) connect the ends (9 an 10) of the two half-shafts (16, 8 and 7) in inverse rotation, while the other ends (2 and 6) are locked by the anti-vibration device preferably located in the wheel plate (6),(Figure 5.)

3. Differential axle system according to claim 1 characterized in that the said self-supporting axle (8, 16) has essentially at its center a shoulder (17) designed to precisely define the attachment of the planet wheel (10) and that a bearing axle (16a) extends beyond its conical gears, the end of which axle has attachment means (24, 25, 26, 27) for attaching said connecting disc (22) (Figures 2 and 6).

4. Differential axle system according to claim 1 characterized in that the wheel plate (6) has a cylindrical wall (30), one end of which is defined by a second base wall (29), while the other free end receives a cover (31) advantageously closed by the wheel pins (40) in an opening (40a).

5. Differential axle system according to claim 4 characterized in that the cover has an offset opening (32) designed to be attached to a drive axle (33), the prominent end of which has a second opening (34) located near the free edge of the compression disc (35).

6. Differential axle system according to claim 5 characterized in that the cover (31) has a threaded opening (38) at its center containing an adjusting screw (39), one conical contact (37) of which is designed to maintain a certain pressure on the center of said compression disc (35).

7. Differential axle system according to claim 4 characterized in that the compartment (30a) has attached to its base wall (29) a first friction wheel (28), and a second friction wheel (36) attached to the compression disc (22), and said compression disc is able to slide axially within the cylindrical wall (30) and along the drive axle (33) (Figures 4, 5).

8. Differential axle system according to claims 1 through 7 characterized in that the planet wheel (10) is rotatably connected to the control disc (22), the contact surfaces (22a and 22b) of which are inserted between the two friction wheels (28 and 36), which are themselves rotatably associated with the second planet wheel (9), both planet wheels (9 and 10) being controlled by the satellite wheels (15) (according to the anti-skid effect).

9. Differential axle system according to claims 1 through 7 characterized in that the drive wheel (4) is rotatably connected to the control disc (22) by means of said self-supporting axle (16), while the second drive wheel (3) is connected in inverse rotation with friction wheels (28, 36), said friction wheels slidably contacting said control disc (22) (according to the differential effect).

10. Differential axle system according to claim 4 characterized in that pressure is exerted on the anti-vibration, anti-skid device contained in the compartment (30a) against the action of the base wall (29) of the cover (31) and of said regulating screw (39), and said regulating screw is located inside the center of the wheel rim (3) but is accessible from outside the vehicle.
